# EUROPEAN PATENT SPECIFICATION

(11) **EP 0 338 647 B1**
(45) Date of publication and mention of the grant of the patent: **22.06.1994**
(21) Application number: 89200996.0
(22) Date of filing: 19.04.1989
(51) Int. Cl.: A01C 7/08, F16L 5/02

(54) **An implement for spreading material**
Düngerstreuer
Epandeur

(30) Priority: 21.04.1988 NL 8801038
(43) Date of publication of application: 25.10.1989
(73) Proprietor: C. van der Lely N.V., NL-3155 PD Maasland (NL)
(72) Inventor: van der Lely, Edwin, Maasland (NL); Ouwerkerk, Cornelis Gerardus, Rozenburg (NL)
(74) Representative: Mulder, Herman

(56) References cited:
- EP-A- 0 037 337
- EP-A- 0 096 017
- EP-A- 0 255 155
- FR-A- 2 270 509
- US-A- 3 812 910

## Description

The invention relates to an implement for spreading material, in particular a pneumatic seed drill, which implement comprises a frame supporting hopper for storing the material and a distribution member which extends at least partly into said hopper, in which implement, during operation, the material is conveyed via the distribution member and via guide channels extending from said distribution member outwardly through the hopper wall to spreading members arranged thereto.

An implement of this kind is known from EP-A-255 155 which discloses all the features of the preamble of claim 1.

It is an object of the invention to so improve an implement of the above-defined type that maintenance for given purposes is made easier. According to the invention, this can be achieved in that, in the region where they are passed through the hopper wall, at least part of the guide channels is divided into an inner portion located at least partly within the hopper and an outer portion located outside the hopper, which two portions are intercoupled by means of a coupling member which is arranged in the hopper wall and includes an inwardly extending connection member to which the inner portion of the guide channel connects, and an outwardly extending connection member to which the outer portion of the guide channel connects, the outer portions and the spreading members are formed as an integral whole, whereby the spreading members are connected to a supporting beam which is detachably connected to frame means and the outer portions are connected easily detachably to the relevant coupling members and, whereby the assembly of outer portions together with the spreading member is detachably from respectively attachably to the hopper and the frame. The assembly of spreading members and outer portions of the guide channels attached thereto can be designed as an integral whole and be connected as such to the coupling members arranged in the hopper wall. Consequently, it is e.g. possible for the implement to be transported from the production site to its place of use in a more compact form. The assembly of the outer portions of the guide channels together with the spreading members as an integral whole can be used to attach the spreading members to the frame in a different manner. An easy transport position for transporting the implement to and from its working site on the agricultural field can be obtained when the spreading members are so attached to the implement that they can be detached from a first position, and be so attached to the frame of the implement in a second position, which is rotated through at least approximately 180° with respect to the first position, and that in their second position the spreading members are located at least substantially under the hopper. The second position of the implement is also usefull to store the implement in periods when it is not used to work with on the field. The arrangement being such that the implement occupies less space when it is stored for use at a later instant. As regards the manufacture of the implement, it is advantageous that the section consisting of the hopper, the distribution member arranged therein, and the inner portions of the guide channel can be pre-fabricated as an integral whole and be mounted as such to the implement. In this connection, it is advantageous when the hopper can be attached to the frame of the implement in a simple manner by means of detachable connection members.

An advantageous embodiment of the implement according to the invention is obtained when the coupling member is provided with a supporting edge located against the inner side of the hopper wall and with a groove located outside the hopper wall, which groove accommodates a locking ring against the outer side of the hopper wall. Furthermore, the assembly of spreading members and outer portions of the guide channels can be connected again to the frame in a simple way when the respective coupling members and outer portions of the guide channels to be interconnected are provided with markings so as to allow of an easy and fast interconnection.

For a better understanding of the invention and to show how the same may be carried into effect, reference will now be made, by way of example, to an advantageous embodiment of the implement shown in the accompanying drawings, wherein:
Figure 1 is a side view of an implement designed as a pneumatic seed drill for spreading material;
Figure 2 is, to an enlarged scale, a cross-sectional view of the passage of a seed tube through the hopper wall, taken on the line II-II in Figure 1;

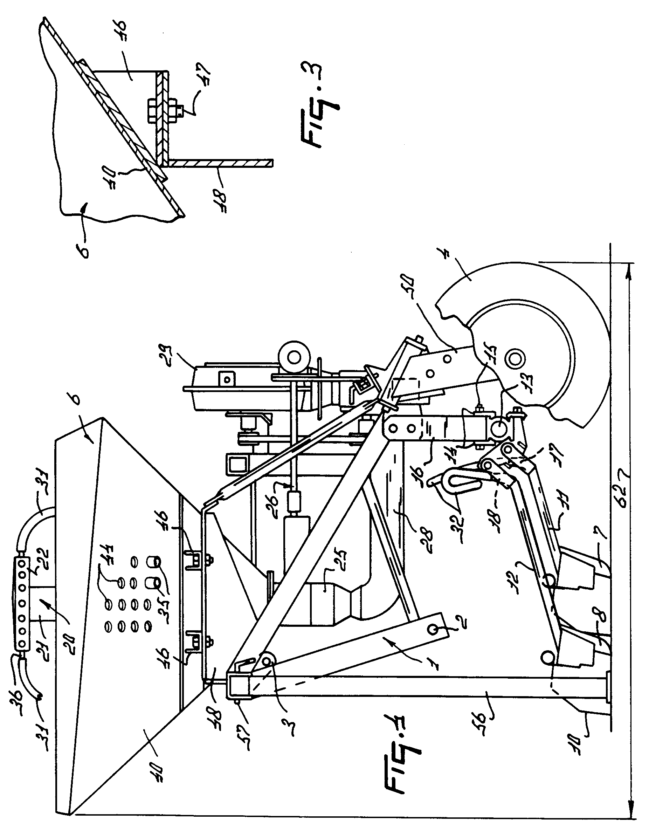

Figure 3 shows the connection of the hopper to the frame of the implement, taken on the line III-III in Figure 1, and
Figure 4 is a side view corresponding to that of Figure 1 of the implement, in which drawing part of the machine is shown to be attached to the frame in a position wherein it is rotated relative to the frame for transport and/or storage purposes.

The implement in accordance with the invention, shown in the drawings as a pneumatic seed drill, comprises a frame 1 which is provided with coupling members constituted by coupling pins 2 and a coupling strip 3. By means of these coupling members, the implement can be coupled to the lifting hitch of a tractor or to a different implement, e.g. a soil cultivating implement. Furthermore, the frame 1 is provided with supporting wheels 4.

The seed drill includes a hopper 6 for the material to be sown as well as spreading members in the form of two rows of seed coulters 7 and 8, of which two rows the row of seed coulters 8 is located behind the row of seed coulters 7, taken in the direction of operative travel 9 of the seed drill. Behind the seed coulters 7 and 8 there are arranged tines 10 for covering the furrows made by the coulters. The seed coulters 7 and 8 are attached to a supporting beam 13 via tubular carrier arms 11 and 12, respectively, so as to be movable in height. The supporting beam 13 is provided with connecting lugs 14, by means of which the beam is bolted to frame arms 16 by bolts 15. The upper ends 17 and 18 of the carrier arms 11 and 12 are connected to a distribution member 20 via flexible distribution tubes 19.

The distribution member 20 comprises a rise pipe 21 which partly extends from bottom to top in the vertical direction through the hopper 6 and at the upper side is provided with a distribution box 22. The lower end of the rise pipe 21 links up with a doser device 25 which is connected to a (non-shown) discharge aperture in the bottom side of the hopper 6. By means of transmission members 26, the doser device 25 is coupled to a stepper wheel 27 which bears on the soil during operation of the implement. By means of a feed pipe 28, the doser device 25 is connected to a fan 29.

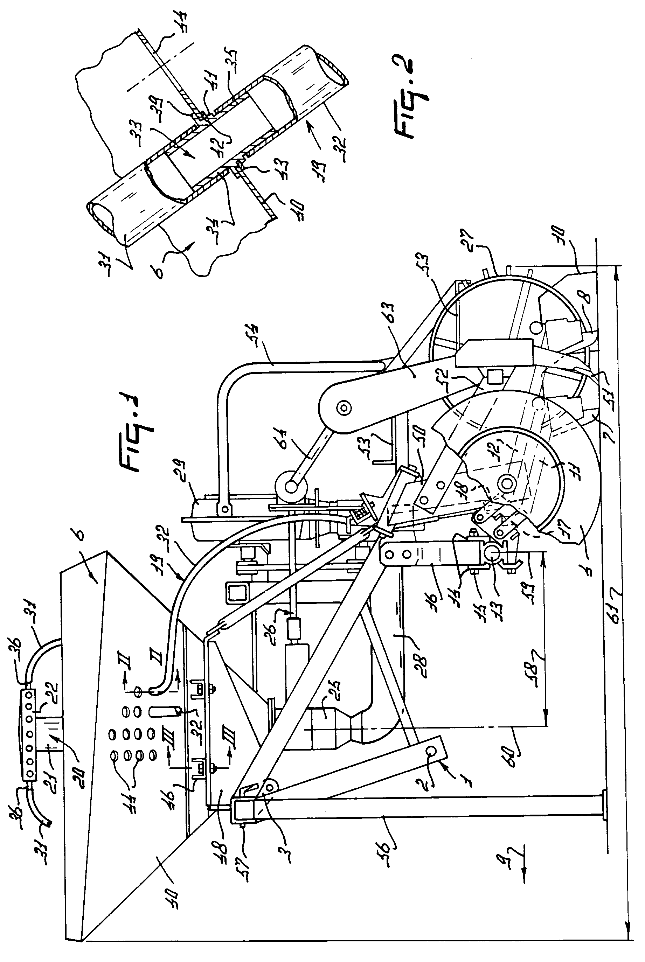

The distribution tubes 19 extend between the distribution box 22 and the tubular carrier arms 11 and 12. Together with the hollow tubular carrier arms 11 and 12, the distribution tubes 19 constitute guide channels for conveying material from the distribution box 22 to the seed coulters 7 and 8. Each distribution tube 19 comprises two flexible portions 31 and 32 which are intercoupled by a coupling member 33. The coupling members 33 are arranged in the wall of the hopper 6, as has been shown in Figure 2 for one coupling member 33. The portions 31 extend between the distribution box 22 and the relevant coupling member in the hopper wall, thereby constituting the inner portions 31 located substantially inside the hopper. The portions 32 extend between the coupling members 33 and the relevant tubular carrier arms 11 and 12, thereby constituting the outer portions 32 located outside the hopper. In a cross-sectional view, the coupling members 33 are substantially identical to the inner portions 31 and the outer portions 32 which, in this embodiment, are of a circular cross-section, while the coupling member 33 is a round tubular member. The coupling member 33 has a coupling end 34 which extends into the hopper and a coupling end 35 which extends outside of it. As has been shown in Figure 2, the inner portions 31 and the outer portions 32 of the distribution tubes 19 are connected to the coupling ends 34 and 35, respectively. The inner portions 31, only two of which have been shown in Figure 1, further connect to tubular connection members 36 of the distribution box 22.

Each of the coupling members 33 includes a supporting ring 39 located against the inner side of the hopper wall. In a thicker coupling member portion 41 extending through one of the apertures 44 in the hopper wall 40 there is formed a groove 42 (Figure 2). The groove 42 accommodates a locking ring 43, or a connecting ring of an other type, located against the outer side of the hopper wall 40. Figure 1 shows only the apertures 44 through which the relevant coupling members 33 can be inserted.

The hopper 6 is fitted with supports 46 which are bolted to the carrier arms 48 of the frame 1 by means of detachable bolt connections 47.

The supporting wheels 4 are applied to carrier arms 50 of the frame 1. In this embodiment, track looseners 51 are fitted to the carrier arms 50 by means of strips 52. Taken in the direction of operative travel 9 of the machine, the track looseners 51 are located behind the supporting wheels 4.

At its rear side, the machine is provided with a foot support 53 which is connected to the frame by means of a carrier bracket 54.

Figure 1 shows the machine in an idle position. In this position, the implement bears on the supporting wheels 4 and on supporting legs 56 fitted to the frame. These supporting legs 56 are connected detachably to the frame by means of locking pins 57.

During operation, the machine is coupled to the lifting hitch of a tractor or of a suchlike vehicle or to an other type of implement which, for example, is coupled already to a tractor. Prior to being used, the machine can be coupled to the lifting hitch of a tractor or to the connection members of an other implement by means of the coupling pins 2 and the coupling strip 3. The machine is particularly suitable for connection to a soil cultivating machine, e.g. an implement for preparing a seed bed. The seed drill can then be connected in such a manner to the soil cultivating machine by means of the coupling pins 2 and the coupling strip 3 that this soil cultivating machine is positioned, at least for a large part, under the hopper 6. When the seed drill is used in combination with a soil cultivating machine, it is advantageous to arrange them in such a manner relative to each other that the hopper is located at least substantially over the soil cultivating machine. As a result thereof, the total weight of the seed drill - soil cultivating machine combination is located as closely as possible to the vehicle, e.g. a tractor hauling the combination. In this situation, the soil cultivating machine - seed drill combination can be coupled to the lifting hitch of the tractor. So as to permit of arranging the hopper 6 over a soil cultivating machine, this hopper is in a comparatively high position relative to the seed coulters 7 and 8 and the supporting wheels 4. The space for accommodating the soil cultivating machine under the hopper 6 can be obtained in particular when the distance 58 between a vertical plane 59 containing the centre line of the supporting beam 13 and a vertical plane 60 containing the centre lines of the hopper 6 and of the rise tube 21 of the distribution member 20 is comparatively large. Then, the total length 61 through which the machine extends parallel to the direction of operative travel 9 is also comparatively great. In this situation, the seed coulters 7 and 8 are positioned fully behind the hopper 6, taken in the direction of operative travel 9, as is also the stepper wheel 27. In this construction, in order to avoid the necessity of positioning the hopper 6 excessively high, the fan 29 is positioned substantially behind the hopper. The supporting wheels 4 are also in a position which, relative to the direction of operative travel 9, is located substantially further towards the rear than the rear side of the hopper 6.

Particularly when the machine is to be transported or to be stored for a longer period of time in a storage room, the large length 61 is a disadvantage as it then occupies a great deal of floor space. To obviate this disadvantage, the length of the machine can be reduced significantly prior to transport or storage. To that end, the assembly of the two rows of seed coulters 7 and 8, together with the supporting beam 13 to which they are connected, can be detached from the frame by removing the bolts 15. The assembly of the two rows of seed coulters 7 and 8 and the supporting beam 13 can then be rotated through 180° and be bolted again to the frame arms 16 by means of the bolts 15, as has been illustrated in Figure 4. In this transport or storage position, the machine can easily be supported by the ground wheels 4 and the supporting legs 56. The rows of seed coulters 7 and 8 are then in a position in which they are protected to some extent between the ground wheels 4 and the supporting legs 56, said legs as well as said ground wheels 4 being positioned on either side of the implement and spaced apart by distances which are at least approximately equal to or slightly in excess of the length of the rows of seed coulters 7 and 8. In this situation, the stepper wheel 27 together with a chain drive 63 coupled thereto and belonging to the transmission member 26, and a drive shaft 64 can be removed from the machine. Since only one stepper wheel 27 with relevant transmission members 63 and 64 is present, a removal of these components from the implement will not offer a serious objection. Likewise, the foot support 53 and the bracket 54 as well as the track loosener 51 and the strip 52 can be removed from the implement. The machine then has a length 62 (Figure 4) which is considerably less, in this embodiment approximately 20%, than the length 61. The removed components, such as the track looseners 51, the stepper wheel 27 and the foot support 53, may be stored in the hopper 6.

In order to see to it that the seed coulters 7 and 8 with the supporting beam 13 can be connected to the frame rotated through 180°, the distribution tubes 19 are divided into an inner portion 31 and an outer portion 32. The distribution tubes 19 are divided into two groups, each of which extends through a group of apertures 44 in opposite sidewalls 40 of the hopper 6. The outer portions 32 of the distribution tubes 19 are divided in two groups, one group being contiguous at one side of the hopper 6 and the other group at the other side to coupling members 33 arranged in opposite sidewalls of the hopper. In addition, the outer portions 32 can be disposed easily detachably over the connecting ends 35, or be removed therefrom. In order to obtain the transport or storage position as shown in Figure 4, the outer portions 32 are detached from the connecting ends 35, whereafter the assembly formed by the supporting beam 13, the rows of seed coulters 7 and 8 and the outer portions 32 can be connected again to the frame arms 16 of the frame in a position which is rotated through 180° relative to Figure 1. In order to return the machine from the position shown in Figure 4 to the operating position shown in Figure 1, the outer portions 32 can be connected again to the connecting ends 35 after the rows of seed coulters 7 and 8 together with the supporting beam 13 have been rotated back. The position of the seed coulters 7 and 8 together with the beam 13 and the outer portions 32 as shown in Figure 1 constitutes a first position for the assembly. Figure 4 shows a second position therefor.

In order to achieve an easy and fast interconnection of the correct outer portions 32 to the correct connecting ends 35, the relevant connecting ends 35 and the ends of the relevant outer portions 32 fitting thereon have been marked such, e.g. by numbering them, that the correct outer portions can be connected again to the correct connecting ends 35. By dividing the distribution tubes into the inner and outer portions 31 and 32, which portions are contiguous to each other in the region of their passage through the walls 40 of the hopper 6, it is achieved that the hopper 6 with the distribution member 20, which includes the rise tube 21 and the distribution box 22, and the inner portions 31 of the guide channels can be prefabricated as a whole and be connected to the frame as such. In this connection, it is furthermore advantageous that the hopper is connectable to the carrier arms 48 of the frame 1 by means of the bolts 47. This connection, whereby the hopper together with the distribution member 20 and the inner portions 31 can be removed as a whole from the frame by releasing the bolts 47, can also be of importance for maintenance and repair of the machine.

It will be obvious that, when the seed coulters 7 and 8 are returned from the transport or storage position shown in Figure 4 to the position shown in Figure 1, also the stepper wheel 27, the foot support 53 and the track loosener 51 can be connected again to the frame in the manner shown in Figure 1 in order to obtain the appropriate working position of the machine.

## Claims

1. An implement for spreading material, in particular a pneumatic seed drill, which implement comprises a frame supporting a hopper (6) for storing the material and a distribution member (20) which extends at least partly into said hopper, in which implement, during operation, the material is conveyed via the distribution member (20) and via guide channels (19) extending from said distribution member outwardly through the hopper wall (40) to spreading members (7, 8) arranged thereto and supported by the frame, characterized in that, in the region where they are passed through the hopper wall (40), at least part of the guide channels (19) is divided into an inner portion (31) located at least partly within the hopper (6) and an outer portion (32) located outside the hopper (6), which two portions are intercoupled by means of a coupling member (33) which is arranged in the hopper wall (40) and includes an inwardly extending connection member (34) to which the inner portion (31) of the guide channel (19) connects, and an outwardly extending connection member (35) to which the outer portion (32) of the guide channel (19) connects, the outer portions (32) and the spreading members (7) are formed as an integral whole, whereby the spreading members are connected to a supporting beam (13) which is detachably connected to frame means (16) and the outer portions (32) are connected easily detachably to the relevant coupling members (33) and, whereby the assembly of outer portions (32) together with the spreading members (7, 8) detachably from respectively attachably to the hopper and the frame.

2. An implement as claimed in claim 1, characterized in that the coupling member (33) is provided with a supporting edge (39) located against the inner side of the hopper wall (40) and with a groove (42) located outside the hopper wall, which groove accommodates a locking ring (43) against the outer side of the hopper wall.

3. An implement as claimed in claim 1 or 2, characterized in that the coupling member (33) is arranged detachably in the hopper wall (40).

4. An implement as claimed in any one of the preceding claims, characterized in that the spreading members are so attached to the implement that they can be detached from a first position, and be so attached to the frame (1) of the implement in a second position, which is rotated through at least approximately 180° with respect to the first position, and that in their second position the spreading members (7, 8) are located at least substantially under the hopper (6).

5. An implement as claimed in any one of the preceding claims, characterized in that the respective contiguous coupling members (33) and outer portions (32) of the guide channels (19) are provided with markings to facilitate their interconnection.

6. An implement as claimed in any one of the preceding claims, characterized in that the inner portion (31) of the guide channel (19) extends between the hopper wall (40) and the upper side of the distribution member (20), which extends upwardly from a portion which is in connection with a discharge aperture in the lower end of the hopper (6).

7. An implement as claimed in any one of the preceding claims, characterized in that the hopper (6) together with at least that portion of the distribution member (20) that is arranged therein and the inner portions (31) of the guide channels (19) is connected to the frame (1) of the implement as a prefabricated whole by means of detachable connection members.

## Patentansprüche

1. Vorrichtung zum Ausbringen von Gut, insbesondere pneumatische Drillmaschine, mit einem Rahmen, an dem ein Vorratsbehälter (6) zur Aufnahme des Gutes abgestützt ist, und mit einem Verteiler (20), der zumindest teilweise in den Vorratsbehälter hineinragt, wobei das Gut während des Betriebes über den Verteiler (20) und Führungskanäle (19) befördert wird, die von dem Verteiler durch die Behälterwand (40) hindurch nach aussen bis zu Austraggliedern (7, 8) geführt sind, die an der Vorrichtung angeordnet und von dem Rahmen abgestützt sind, dadurch gekennzeichnet, dass zumindest ein Teil der Führungskanäle (19) in dem Bereich, in dem sie durch die Behälterwand (40) hindurchgeführt sind, in einen inneren, zumindest teilweise innerhalb des Vorratsbehälters (6) angeordneten Abschnitt (31) und einen äusseren, ausserhalb des Vorratsbehälters (6) angeordneten Abschnitt (32) aufgeteilt sind, wobei die beiden Abschnitte mittels eines Kupplungsstückes (33) miteinander verbunden sind, das in der Behälterwand (40) angeordnet ist und einen nach innen gerichteten KUpplungsteils (34) aufweist, an den der innere Abschnitt (31) des Führungskanals (19) angeschlossen ist, sowie einen nach aussen gerichteten Kupplungsteil (35), an den der äussere Abschnitt (32) des Führungskanals (19) angeschlossen ist; die äusseren Abschnitte (32) und die Austragglieder (7) sind einstückig ausgebildet, wobei die Austragglieder mit einem Träger (13) verbunden sind, der mit Rahmenteilen (16) lösbar verbunden ist, und wobei die äusseren Abschnitte (32) leicht lösbar mit den zugehörigen Kupplungsstücken (33) verbunden sind, und wobei ferner die aus den äusseren Abschnitten (32) und den Austraggliedern (7, 8) bestehende Einheit von dem Vorratsbehälter und dem Rahmen zu lösen bzw. an ihm anzubringen ist.

2. Vorrichtung nach Anspruch 1, dadurch gekennzeichnet, dass das Kupplungsstück (33) einen an der Innenseite der Behälterwand (40) angeordneten Stütztflansch (39) sowie eine Nut (42) aufweist, die ausserhalb der Behälterwand angeordnet ist und einen Haltering (43) enthält, der gegen die Aussenseite der Behälterwand angeordnet ist.

3. Vorrichtung nach Anspruch 1 oder 2, dadurch gekennzeichnet, dass das Kupplungsstück (33) in der Behälterwand (40) lösbar angeordnet ist.

4. Vorrichtung nach einem der vorhergehenden Ansprüche, dadurch gekennzeichnet, dass die Austragglieder an der Vorrichtung derart angeordnet sind, dass sie aus einer ersten Position zu lösen und an dem Rahmen (1) der Vorrichtung in einer zweiten Position anzuordnen sind, in der sie in bezug auf die erste Position um mindestens annährend 180° verschwenkt sind, und dass die Austragglieder (7, 8) in ihrer zweiten Position zumindest im wesentlichen unter dem Vorratsbehälter (6) angeordnet sind.

5. Vorrichtung nach einem der vorhergehenden Ansprüche, dadurch gekennzeichnet, dass die jeweils miteinander zu verbindenden Kupplungsstücke (33) und äusseren Abschnitte (32) der Führungskanäle (19) mit Markierungen versehen sind, um das Verbinden zu erleichtern.

6. Vorrichtung nach einem der vorhergehenden Ansprüche, dadurch gekennzeichnet, dass der innere Anschnitt (31) des Führungskanals (19) zwischen der Behälterwand (40) und der Oberseite des Verteilers (20) angeordnet ist, der sich von einem Abschnitt aufwärts erstreckt, der mit einer im unteren Ende des Vorratsbehälters (6) angeordneten Auslassöffnung verbunden ist.

7. Vorrichtung nach einem der vorhergehenden Ansprüche, dadurch gekennzeichnet, dass der Vorratsbehälter (6) mit mindestens dem in ihm angeordneten Teil des Verteilers (20) und den inneren Abschnitten (31) der Führungskanäle (19) als vorgefertigte Einheit mittels lösbarer Verbindungsstücke mit dem Rahmen (1) der Vorrichtung verbunden ist.

## Revendications

1. Machine pour épandre de la matière, en particulier un semoir pneumatique, laquelle machine comprend un châssis supportant une trémie (6) pour stocker la matière et un organe distributeur (20) qui s'étend au moins partiellement dans ladite trémie, dans laquelle machine, pendant le travail, la matière est transportée via l'organe distributeur (20) et via des conduits de guidage (19) s'étendant à partir dudit organe distributeur vers l'extérieur à travers la paroi (40) de la trémie jusqu'à des organes épandeurs (7, 8) disposés sur ceux-ci et supportés par le châssis,
**caractérisée** en ce que, dans la région où ils traversent la paroi (40) de la trémie, une partie au moins des conduits de guidage (19) est divisée en une partie interne (31) située au moins partiellement dans la trémie (6) et une partie externe (32) située hors de la trémie (6), lesquelles deux parties sont reliées entre elles au moyen d'un organe de couplage (33) qui est disposé dans la paroi (40) de la trémie et comprend un organe connecteur (34) s'étendant vers l'intérieur, auquel se raccorde la partie interne (31) du conduit de guidage (19), et un organe connecteur (35) s'étendant vers l'extérieur, auquel se raccorde la partie externe (32) du conduit de guidage (19), les parties extérieures (32) et les organes épandeurs (7) sont formés comme un tout intégral, les organes épandeurs étant reliés à une poutre de support (13) qui est reliée de manière amovible à des moyens (16) du châssis et les parties extérieures (32) sont reliées de manière facilement amovible aux organes de couplage (33) correspondants et l'ensemble des parties extérieures (32), ensemble avec les organes épandeurs (7, 8) est respectivement amovible par rapport à la trémie et au châssis et peut leur être attaché.

2. Machine selon la revendication 1, caractérisée en ce que l'organe de couplage (33) est muni d'un bord de support (39) situé contre le côté intérieur de la paroi (40) de la trémie et d'une gorge (42) située à l'extérieur de la paroi de la trémie, laquelle gorge sert à loger une bague de verrouillage (43) contre le côté extérieur de la paroi de la trémie.

3. Machine selon la revendication 1 ou 2, caractérisée en ce que l'organe de couplage (33) est monté de manière amovible dans la paroi (40) de la trémie.

4. Machine selon l'une quelconque des revendications précédentes, caractérisée en ce que les organes épandeurs sont attachés à la machine de manière à pouvoir être détachés d'une première position et être attachés au châssis (1) de la machine en une deuxième position située à au moins environ 180° de la première position, après rotation, et en ce que, dans leur deuxième position, les organes épandeurs (7, 8) sont situés au moins sensiblement sous la trémie (6).

5. Machine selon l'une quelconque des revendications précédentes, caractérisée en ce que les organes de couplage (33) contigus respectifs et les parties externes (32) des conduits de guidage (19) sont munis de marquages pour faciliter leur interconnexion.

6. Machine selon l'une quelconque des revendications précédentes, caractérisée en ce que la partie interne (31) du conduit de guidage (19) s'étend entre la paroi (40) de la trémie et le côté supérieur de l'organe distributeur (20) qui s'étend vers le haut à partir d'une partie qui est en communication avec une ouverture de décharge dans l'extrémité inférieure de la trémie (6).

7. Machine selon l'une quelconque des revendications précédentes, caractérisée en ce que la trémie (6), ensemble avec au moins la partie de l'organe distributeur (20) qui est disposée dans celle-ci et les parties internes (31) des conduits de guidage (19) est reliée au châssis (1) de la machine sous la forme d'un ensemble préfabriqué au moyen d'organes de connexion amovibles.
